# EUROPEAN PATENT APPLICATION

(11) **EP 2 249 180 A2**
(43) Date of publication of application: **10.11.2010**
(21) Application number: 10161280.2
(22) Date of filing: 28.04.2010
(51) Int. Cl.: G01S 19/24, G01S 19/37

(54) **Processing code-modulated signals**

(30) Priority: 30.04.2009 GB 0907486
(71) Applicant: SAMSUNG ELECTRONICS CO., LTD., Suwon-si Gyeonggi-do 442-742 (KR)
(72) Inventor: Hadef, Mahmoud, 442-742 Gyeonggi-do (KR)
(74) Representative: Jenkins, Richard Gavin

(57) **Abstract**

A method of processing a received first code-modulated signal, the received first code-modulated signal being a first signal modulated with a first code, to determine at least one of said first code and a delay in the first code-modulated signal, which determines a correlation between the received first code-modulated signal and a second code, the second code being at least substantially a sum of a plurality of further codes.

## Description

### FIELD OF THE INVENTION

The present invention relates to the processing of code-modulated signals, and in particular, although not exclusively, to the processing of code-modulated navigation signals transmitted from space vehicles (SVs) of Global Navigation Satellite Systems (GNSSs), e.g., the Global Positioning System (GPS).

### BACKGROUND OF THE INVENTION

Code-modulated signals are used in a wide variety of applications. For example, in certain GNSSs, navigation signals transmitted from the respective SVs are code modulated, i.e., using Code Division Multiple Access (CDMA). In the GPS system, for example, each satellite of the constellation is allocated a respective code. A terrestrial receiver is typically programmed with the plurality of codes used by the constellation of SVs, and can therefore receive a navigation signal and identify the transmitting SV from the particular code with which the received signal is modulated. The identification of this code is typically performed by the receiver modulating a local signal with each of the possible codes in turn, and in each case looking for a correlation between the local code-modulated signal and the received signal. For each possible code, the receiver is also arranged to vary a code delay on the local code-modulated signal, so as to be able to identify peak correlation with the received signal which itself incorporates a delay introduced by the transmission path from SV to receiver. In this way, the receiver can identify both the respective identity of the transmitting SV for each received signal and the respective delay, and from a plurality of received signals can, therefore, determine its position.

In more detail, the acquisition of GPS signals requires a two-dimensional search using both frequency and code delay. GPS signals are virtually undetectable unless they are de-spread with replica code that is aligned with the received code (from the satellite), i.e., the code with which the received signal has been modulated. Since the GPS signals can not be detected unless alignment is achieved, a search over all possible alignment positions has in the past been unavoidable.

This substantive search has high computational complexity, requires high computational processing power, requires significant time, and also increases the Time to First Fix (TTFF), particularly if the acquisition mode is a cold start.

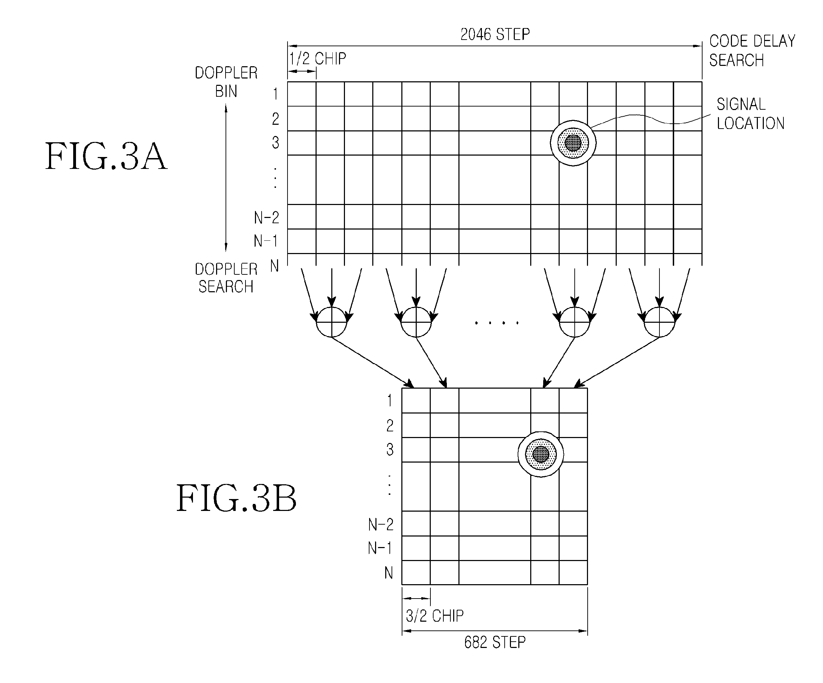

In even more detail, GPS SVs typically encode their respective navigation signals with respective coarse acquisition (C/A) codes, each comprising a respective sequence of 1023 bits (which are also referred to as chips). A GPS receiver must conduct a search in order to find each satellite signal, where the dimensions (or parameters) of the search are: C/A code; C/A-code delay; and Doppler. In the past, methods have relied on searches conducted across the full delay range of the C/A-code (1023 chips) for each frequency searched (see figure 3a). The receiver generates the same pseudo-random-noise (PRN) code as that of the satellite and shifts the delay of this code in discrete steps, typically one or half a chip, until approximate alignment with the received code is indicated. This has meant that for each code (and each carrier frequency, if applicable) either 1023 or 2046 code positions had to be searched.

### SUMMARY OF THE INVENTION

It is an aspect of certain embodiments of this invention to solve, mitigate, or obviate, at least partly, at least one of the problems and/or disadvantages associated with the prior art.

Certain embodiments provide methods of processing code-modulated signals, which provide, or can be used in, search methods which reduce the TTFF and computational complexity of acquiring GNSS and/or other signals, compared with conventional search methods and processing techniques. Certain embodiments provide faster acquisition processes (for GNSS signals, such as GPS signals, and/or for other code-modulated signals) compared with conventional searches, with similar maximum relative degradation levels.

Certain embodiments aim to provide processing methods and apparatus which are able to process a received code-modulated signal and determine at least one of the codes with which the signal is modulated and a delay introduced by a transmission path more quickly and/or with reduced computation time as compared to prior art techniques.

According to a first aspect of the invention there is provided a method of processing a received first code-modulated signal, the signal being a first signal modulated with a first code (for example a signal having been received by receiving means from transmitting means over a transmission path such that the received first code-modulated signal comprises a delay introduced by the transmission path), to determine at least one of said first codes and a delay in the first code-modulated signal (for example, for the purpose of synchronizing with the received first code-modulated signal and/or extracting data from it). The method includes determining a correlation between the received first code-modulated signal and a second code, the second code being at least substantially a sum of a plurality of further codes.

This method provides the advantage that the correlation between the first code-modulated signal and the second code provides an indication of the correlation between the first code-modulated signal and each of the plurality of further codes of which the second code is substantially a sum. The single correlation operation can thus be used to replace a plurality of correlation operations from prior art techniques; that is, a single correlation with the second code (which is formed from a plurality of further codes) replaces a plurality of correlation operations that would be required in the prior art, that is a single correlation operation corresponding to each of the component further codes of the second code. Clearly, this method has a wide variety of applications and enables embodiments of the invention to perform correlations and identify the first code and/or a delay on the received first code-modulated signal more rapidly and with reduced computation as compared to the prior art.

It will be appreciated that determining a correlation between the first code-modulated signal and the second code may, in certain embodiments, comprise determining a correlation between the first code-modulated signal and a second signal which carries, includes, or otherwise comprises the second code.

It will also be appreciated that the term "determining a correlation between the received first code-modulated signal and a second code" encompasses both determining a correlation between all of the received first code-modulated signal and the second code, and determining a correlation between a portion of the received first code-modulated signal and the second code; in certain embodiments a correlation of the second code (or part of it) with the whole received first code-modulated signal is not determined.

In certain embodiments, the first and/or second codes are binary codes, but different, non-binary codes may be employed in alternative embodiments.

It will be understood that the requirement for the second code to be at least substantially a sum of the plurality of further codes is satisfied if the second code is a strict sum of the plurality of further codes. However, the term is to be interpreted more broadly, and does not necessarily require this strict correspondence.

For example, in embodiments in which the first and second codes are binary codes, depending on the length (i.e., the number of bits) of the first further binary code, the second binary code may be closely based on a strict sum of the component plurality of further codes, but with a small proportion of bits being modified. Similarly, when forming a sum of the plurality of further binary codes, to generate the second binary code, there is some flexibility as to how end carry bits are handled. In certain embodiments, a carry bit from one end of the sum may be carried round to the other end (i.e., a circular or cyclic carry method can be employed). Alternatively, in other embodiments, the second code may be generated by adding the component plurality of further binary codes in a manner in which any carry bit from one end (e.g., from the most significant bit position) is simply discarded. Thus, the second binary code in certain embodiments of the invention must, at least to a large extent, be a result of an addition of a plurality of further binary codes, but a strict, unique correspondence to a sum of the component further binary codes is not essential. In other words, in certain embodiments, the second binary code may consist of, or be, a sum of the plurality of further binary codes, but in alternative embodiments the second binary code may substantially consist of or comprise such a sum.

In certain embodiments, the method also includes: generating said second code by adding (i.e., adding together, forming a sum of) said plurality of further codes. In certain embodiments, each of said plurality of further codes is a code corresponding to a respective one of a known (predetermined) plurality of transmission sources. For example, the second code may comprise a combination of different codes, each corresponding to a different, known satellite (or space vehicle (SV)) of a GNSS system. In this way, a single correlation operation can, in effect, search for correlation with a plurality of possible transmitting SVs at the same time, rather than being limited to looking for correlation with a single SV as has been the case in the prior art.

In certain embodiments, the plurality of further codes includes a first further code, having a sequence of N code elements (e.g., bits, chips, symbols, etc.), and each other further code of said plurality of further codes comprises the same sequence of N code elements as the first further code but circularly shifted in position by a respective predetermined amount, such that each code element of the sequence of N code elements in the or each other further code has a position which is circularly shifted by the respective predetermined amount compared with the position of the corresponding code element in the first further code.

Thus, the first further code may include an ordered list of code elements forming a set, and each of the other further codes may include the same set of elements in an order determined by the order in the first further code and the respective circular shift. By employing a second code formed by summing such further codes, methods embodying the invention are able to search a plurality of code-delays with a single correlation operation, compared with prior art techniques in which just a single code delay could be "searched" at a time.

In certain embodiments, the first code is a first binary code comprising a sequence of bits.

In certain embodiments, the plurality of further codes is a plurality of further binary codes including a first further binary code, having a sequence of N bits, and the other further binary code of said plurality of further binary codes includes the same sequence of N bits as the first further binary code but circularly shifted in position by a respective predetermined amount, such that each bit of the sequence of N bits in the or each other further binary code has a position which is circularly shifted by the respective predetermined amount compared with the position of the corresponding bit in the first further binary code.

It will be appreciated that circular shifts are well known. In the case of binary codes, a circular shift of one bit position to the right applied to the first further binary code, for example, results in the last bit on the right of the unshifted first further binary code becoming the first element on the left of the shifted code, and all the other bits in the code being shifted by one bit position to the right. This circular shift of one bit position to the right is merely an example, however, and it will be appreciated that in alternative embodiments circular shifts in different directions (e.g., to the right and left) may be employed, and those shifts may be by one or more bit (or other code element) positions.

In certain embodiments the first code may already be known, in which case a method embodying the invention can be used to determine the delay of the received signal, with the correlation operation in effect being able to search a plurality of code delay positions simultaneously (in effect, each of the plurality of further codes of which the second code is a sum can represent a particular delay between the received signal and local code).

In alternative embodiments, the first code may initially be unknown, in which case methods embodying the invention can be used for a plurality of possible (i.e., known candidate) codes to determine which one gives the best correlation, and so corresponds to the first code.

In certain embodiments, the first code is a first binary code comprising a sequence of N bits.

In certain embodiments, the first binary code has the same sequence of N bits as each of said further binary codes.

It will be appreciated that, in certain embodiments, the length of each further binary code (say N) is not necessarily the same as the length of the first binary code (say M). Generally, N may be a multiple of M, i.e., N = K * M, for example when coherent or incoherent integration techniques are used.

In certain embodiments, each further binary code includes a sequence of 2N bits, each sequence of 2N bits including said sequence of N bits. This enables a "half-bit", or "half-chip" search to be made. For example, the first binary code may include the bit sequence 110010110, and the first further binary code may include the bit sequence 111100001100111100, i.e., a sequence based on the first code, but with the bit sequence repeated. It will be appreciated that this example is extremely simplified; in practice the sequences will typically include a very much larger number of bits.

In certain examples, the first binary code may include 1023 bits or chips. Each further binary code may be arranged to have a sequence of 2046 bits or chips, each bit of the 1023 bit code simply being repeated in each further binary code. Each further binary code still includes the sequence of 1023 bits, but they are spaced apart by the repeated bits. An advantage of using further binary codes comprising 2N bits in the processing of a received signal code-modulated with an N bit code is that shifts of one bit position in the further binary codes correspond to half bit (or chip) shifts in the first binary code, and enable a finer search for peak correlation with the received signal to be performed.

In certain embodiments, said plurality of further binary codes form a series of codes in which the sequence of bits in each code is circularly shifted by one bit position from one further binary code to the next in the series.

Thus, although in certain embodiments the circular shift between one further code and the nearest other further code in the plurality may be greater than one code element (e.g., bit) position, it is advantageous if the plurality of further codes form a series in which the shift from one to another is just one code element. This enables the single correlation operation to, in effect, search a plurality of adjacent code delay positions, and can result in a high correlation factor between the first code-modulated signal and the second code being observed, even though the second code is at least substantially a sum of a plurality of further codes.

In certain embodiments, the second code is a sum of said plurality of further codes (i.e., a strict sum, not just substantially a sum).

In certain embodiments, the sum is a circular carry.

In certain embodiments, the plurality of further codes consists of three said further codes.

These three further codes may, for example, include a first further binary code corresponding to a known code used to modulate transmitted signals, a second further binary code corresponding to the first further binary code circularly shifted by one bit position to the right, and a third further binary code formed by circularly shifting the first further binary code by one bit position to the left. The first further binary code can be regarded as a "prompt" or "undelayed" code, the second further binary code being an "early" code, and the third further binary code being a "late" code.

Of course, in alternative embodiments, the relative positions of these different further codes may be different. A second further code may be formed by shifting a first further code by a predetermined amount in one direction, and a third further code may be formed by shifting the second further code by that same predetermined amount in that same direction.

Also, it will be appreciated that in alternative embodiments the second code may be at least substantially a sum of two, three or even more further codes. There will be a trade-off, however, and the larger the number of further codes being added to form the second code the lower will be the observed peak correlation between the first code-modulated signal and the second code.

In certain embodiments, the method further includes introducing a delay into the second code; and varying the delay introduced into the second code to identify a peak correlation between the first code-modulated signal and the second code.

It will be appreciated that the delay may be introduced into the second code by a variety of techniques. For example, the second code may first be generated, and then its code elements (e.g., bits) may be shifted to introduce the delay. In alternative embodiments, however, the delay may be introduced to each of the plurality of further codes of which the second code is at least substantially a sum. Thus, the delay may be introduced to each of the component further codes of the combination, rather than to the second signal itself.

In certain embodiments, the method further includes applying a circular shift to the second code; and determining a correlation between the received first code-modulated signal and the shifted second code.

Again, the circular shift is such that as code elements (e.g., bits) are shifted from one end of the second code they rejoin it at the other end.

In certain embodiments, the method further includes varying the applied circular shift to determine a peak correlation between the first code-modulated signal and the shifted second code.

In certain embodiments, the second code is a binary code and the circular shift applied to the second binary code is an integer number of three bit positions, i.e., the shift S = 3 * K, where K is an integer.

In certain embodiments, the method further includes selecting said second code from a plurality of second codes, each being at least substantially a sum of a respective plurality of further codes comprising a respective first further code.

For example, this method may be performed by user equipment such as a mobile phone or a GPS handset, which is pre-programmed with all of the codes known to be used by one or more GNSS systems with which it is adapted to operate. In order to identify a particular SV from which a signal is received, the user equipment runs through the selection of known codes, for each one using methods embodying the invention to look for peak correlation between the second code-modulated signal, generated in the user equipment, and the received signal. In this way, the user equipment is able to identify the SV transmitting each signal it receives, and also then can identify the delay on the respective signals. The acquisition of these SV signals is faster than in the prior art, because each correlation performed by the User Equipment(UE), in effect, covers a correlation between the received signal and a particular known code in a plurality of delay positions, that plurality corresponding in number to the number of further binary codes of which the second binary code is substantially a sum.

In certain embodiments, the user equipment may store the plurality of SV codes, and when acquiring SV signals the UE may generate the respective second codes from those stored codes for correlation purposes. Alternatively, the second codes may be pre-calculated (for example by the UE itself, or by some external equipment) and the UE may then be adapted simply to store the plurality of second binary codes (each one of course corresponding to a particular SV code, but being based on the sum of at least two codes related to that respective code).

In certain embodiments, each respective first further code is a code corresponding to a respective known signal transmitter, for example a respective space vehicle (SV) of a Global Navigation Satellite System (GNSS).

In certain embodiments, the method further includes modulating a second signal with the second code to generate a second code-modulated signal; and determining a correlation between the first and second code-modulated signals.

In certain embodiments, the method further includes generating the second binary code by forming a sum of said plurality of further binary codes, which
generates the other further binary code of said plurality from said first further binary code.

In certain embodiments, the method further comprises:
selecting said first further binary code from a plurality of binary codes, which each of said plurality of binary codes is a code corresponding to a respective known signal transmitter, for example a respective SV of a GNSS.

In certain embodiments, the method further includes storing the second code in a memory.

Thus, to reiterate, one option in embodiments of the invention is to store a plurality of first further codes in a memory and then generate the other further codes and the second codes from the first further codes as required.

Another option is to pre-generate the set of second codes from the corresponding set of first further codes (each one corresponding, for example, to the code used by a particular SV of a GNSS) and store the results, i.e., the second codes, in a memory. Then, when processing received signals, the apparatus, UE, etc. simply has to select from the stored second codes, rather than having to generate them, thereby saving processing time. The apparatus does, however, still then have to perform circular or cyclic shifts of the second codes in order to find peak correlation with the received signal, which incorporates an initially unknown delay.

In certain embodiments, the method further includes determining a strength of the received first code-modulated signal; and
determining the number of further codes in said plurality of further codes according to said strength.

Thus, embodiments may provide an adaptive process. For strong signals, a combination of a large number of codes can be used, whilst a smaller number of codes may be combined into the second code for correlation with relatively weak signals.

In certain embodiments, the method further includes determining correlations between the first code-modulated signal and a plurality of said second codes, each second code being at least substantially a sum of a respective plurality of further binary codes; determining from said correlations the particular second code giving a peak correlation; and performing further processing to determine which of the further codes corresponding to the particular second code corresponds to the first code.

Thus, in certain embodiments, the initial correlation between the first code-modulated signal and the second code provides faster searching than with the prior art techniques because each correlation, in effect, covers a plurality of code-delay positions. However, having identified the second code, which gives the best correlation, one then has to perform further processing in order to identify which of the respective further codes of that second code gives the very best correlation. This can be thought of as a final, fine-tuning operation. It represents only a minor additional amount of processing, after performing the initial search, which is faster than prior art techniques.

In certain embodiments, the first code-modulated signal is a navigation signal transmitted from an SV of a GNSS.

In certain embodiments, the method further includes using the results of said correlation or correlations to identify at least one of the first codes and a delay introduced into the first signal by a transmission path (e.g., from the transmitting source to the receiving means).

In certain embodiments, the method further includes identifying the first code and extracting data from the first code-modulated signal.

Another aspect of the invention provides the use of a method in accordance with any claim of this specification in the acquisition of a navigation signal from an SV of a GNSS.

Another aspect of the invention provides an apparatus arranged to implement a method in accordance with any claim of this specification.

Another aspect of the invention provides a GNSS receiver adapted to implement a method in accordance with any claim of this specification.

In certain embodiments, the GNSS receiver includes receiving means for receiving said first code-modulated signal; and processing means for determining said correlation or correlations.

In certain embodiments, the processing means is further adapted to generate the second code.

In certain embodiments, the GNSS receiver further includes memory means arranged to store at least one of: said first further code or codes; and said second code or codes.

Another aspect of the invention provides a method of determining a position or location from a plurality of received code-modulated navigation signals, the method includes processing each received code-modulated signal using a method in accordance with the first aspect of the invention.

Another aspect of the invention provides a computer program including instructions arranged, when executed, to implement a method in accordance with any other aspect of the invention.

Another aspect of the invention provides machine-readable storage storing a computer program as defined above.

### BRIEF DESCRIPTION OF THE DRAWINGS

Embodiments of the invention will now be described with reference to the accompanying drawings, in which:
Fig. 1 is a schematic representation of an apparatus arranged to implement a method embodying the present invention;
Fig. 2a illustrates the correlation output of a C/A code as a function of code delay in a method in accordance with the prior art, and Fig. 2b shows the corresponding correlation output of a C/A code as a function of code delay in a method embodying the present invention;
Fig. 3 illustrates the two dimensional search area of (a) a conventional correlation technique with half chip shifts, and (b) a joint correlation technique embodying the present invention and utilizing a 3/2 chip step;
Fig. 4 illustrates the addition of first, second, and third further binary codes to produce a second binary code in embodiments of the present invention;
Fig. 5 illustrates a circular shift applied to a second binary code in embodiments of the present invention;
Fig. 6 is a flow chart illustrating a signal processing method embodying the present invention; and
Fig. 7 is a schematic representation of apparatus embodying the present invention.

### DETAILED DESCRIPTION OF THE INVENTION

It will be appreciated from the following description that certain embodiments of the invention can be regarded as employing joined correlation techniques to provide enhanced GPS (and indeed other GNSS) acquisition.

Certain embodiments apply directly to the enhanced search and acquisition of GPS signals. Although certain embodiments are designed specifically for mobile devices adapted for use in GPS systems, other embodiments may also be used for other GNSS receivers, for example those adapted to work with the Galileo and Glonass systems. Embodiments of the present invention are also applicable to methods of utilizing signals from a plurality of those known GNSS systems, and further embodiments provide a receiving apparatus adapted for use with a plurality of the known GNSS systems.

Furthermore, it will be appreciated that embodiments of the present invention may also be incorporated in, and indeed may be embodied by, communication devices requiring CDMA synchronization. In general, embodiments of the present invention find widely application in the processing of code-modulated signals.

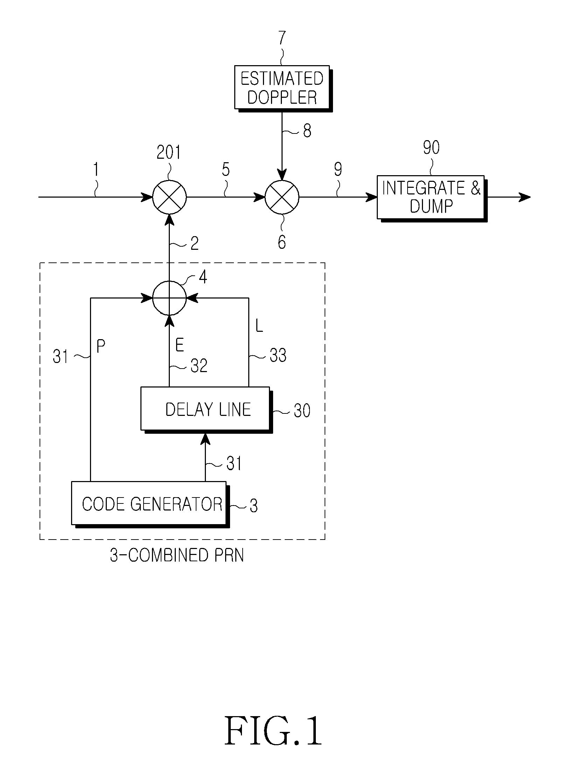

A first embodiment of the present invention provides a search method, which reduces the TTFF and computational complexity of the conventional search method and speeds up the acquisition process with adequate signal levels due to the following:
The inventive method uses a "3-combined PRN code" instead of the prompt version. In other words, rather than using simply a PRN code to modulate a second signal and correlate that second signal with the received signal, the method uses a second code which is itself a combination of three different PRN codes. The 3-combined version consists of a prompt PRN code, the PRN code shifted half chip forward (early version) and the PRN code shifted half chip backward (late version). Instead of performing correlations with a prompt PRN code replica, the code replica is replaced by the 3-combined PRN code (see Figure 1).

Referring to Fig. 1, the apparatus comprises a code generator 3, which is arranged to generate the prompt code 31 (which can be regarded as the first further binary code) this prompt code 31 is supplied to an adder 4. This prompt code 31 is also supplied to a delay line or delay means 30 which generates from the prompt code an early version 32 (which can be described as a second further binary code) and a late code 33 (which can also be described as a third further binary code). The early code 32 corresponds to the prompt code 31, but shifted circularly in a forward direction by one bit position. The late code 33 corresponds to the prompt code 31 shifted circularly backward by one bit position. The early and late codes 32 and 33 are also supplied to the adder 4, and an output of the adder 2 is a second signal, that second signal carrying a second code, which is a combination of the prompt, early and late codes. Another way of looking at this is that the second signal 2 carries (comprises) a second code, which comprises a sum of the prompt, early, and late codes (i.e., the first, second and third further prompt codes). This second signal 2 is then correlated with the received signal 1, which is a first signal modulated with a first binary code. This determination of a correlation is achieved by supplying the first code-modulated signal 1 and the second signal 2 to a mixer 201.

The output signal 5 from the mixer is compensated by the output signal 8 which is generated by an estimated Doppler unit 7. To complete the correlation process, the output from this second mixer 6, signal 9, is integrated and dumped by unit 90. The output of 90 is then saved for each iteration until the search is concluded.

For each prompt code 31 generated by the code generator 3, the arrangement in Fig. 1 enables three code positions or delays to be searched against the received signal in a single correlation operation.

If we regard each correlation operation as searching a particular cell of a signal search (or signal acquisition) method, then the correlation output of each new cell (using the apparatus and technique illustrated in Fig. 1) is the equivalent of accumulating three horizontal adjacent conventional cell values (see figure 3), as compared to the prior art.

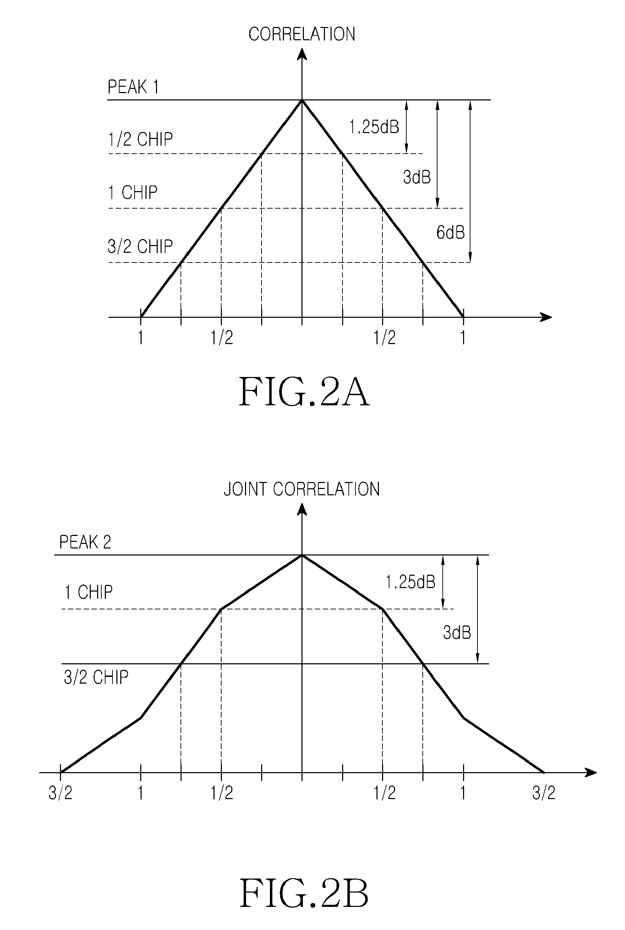

Since the information of three consecutive code versions are incorporated in one sequence, the code delay (i.e., the circular shift to the second code) that can be used with a similar maximum degradation of 3dB compared to the conventional one chip step search, as shown in figure 2, is 3/2 chip.

Therefore, the new method embodying the present invention can ensure:
3/2 times faster acquisition search than the conventional 1 chip search with similar degradation of 3dB (see Figure 2).

Acquisition search at double the rate than the conventional half chip with similar degradation of 1.25dB (see Figure 2).

This method has potential to be generalised to n-combined-search method, n times faster than half chip search. Even though this may lead to noise accumulation effect, this method would be very useful as pre-process in a cold start search.

In other words, rather than using a second code, formed by summing (that is, adding or combining) three adjacent codes, alternative embodiments may use second codes which are formed from a sum of more than three further binary codes. Increasing the number of further codes used to generate the second code has the potential to speed up the search by reducing the number of separate correlation operations, which need to be performed. However, this is at the expense of reducing the observed peak correlation, so in practice a balance should be achieved.

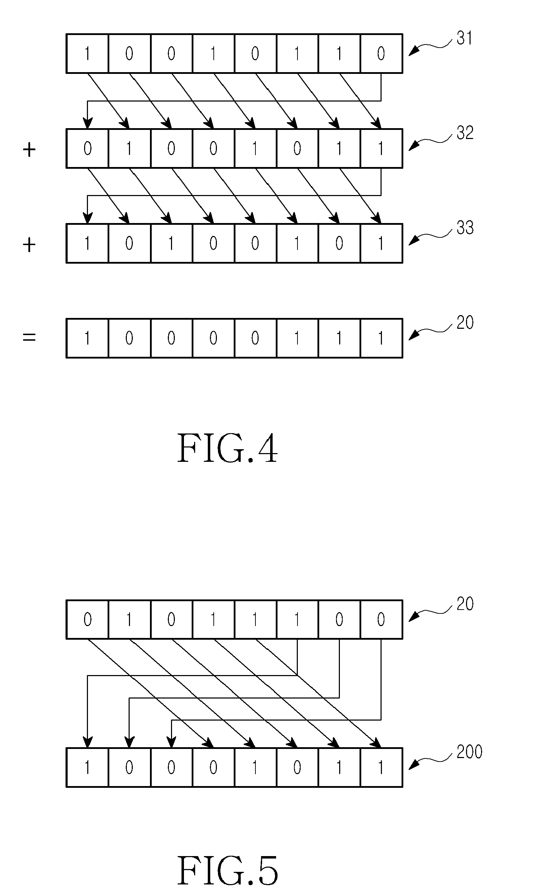

Referring now to Fig. 4, this is a highly simplified example showing the generation of a second binary code 20 from three further binary codes in certain embodiments of the invention. To generate the second code, one first takes a first further binary code 31, which in this simplified example consists of a sequence of 8 bits (in practical embodiments, the sequence may comprise tens, hundreds, or even thousands of bits or more, such as 1023 or 2046 bits or chips for GPS signal processing). From this first further binary code 31, a second further binary code 32 is generated by circularly shifting the bits of the first further binary code 31 one bit position to the right. This results in the last bit, at the right hand end of the first further binary code 31 becoming the first bit, that is the bit at the left hand end of the second further binary code 32, the other bits from the first code 31 have all been shifted by one bit position to the right, as shown by the arrows in the figure. A third further binary code 33 is similarly generated from the second further binary code 32 by again making a circular shift of one bit position to the right. The second code 20 is then formed by summing together the first, second and third further binary codes 31, 32, 33, with any carry at the most significant bit position in this example (the left hand end of the second code 20) being circularly carried round to the least significant bit position. As discussed above, in other embodiments this carry may simply be discarded.

Referring now to Fig. 5, it will be appreciated from the above that after generating a second signal carrying the second code and determining a correlation between the first code-modulated signal and the second signal, it will typically be desirable to then progressively shift the bits of the second code to search for correlations between the received signal and the second signal for all possible delay positions. In certain examples, the second code may be shifted by three bit positions, enabling the whole range of possible delay positions to be covered three times faster, and with three times less processing time than conventional search techniques. Fig. 5 shows the generation of a shifted second code 200 from an original second code 20 by performing a circular shift of 3 bit positions. As can be seen, the 3 bits at the right hand end of the second code 20 cycle or wrap around to join the left hand end of the shifted second code 200. Such a 3-bit shift can be used in examples where the second code is itself the sum of 3 further binary codes as each correlation, in effect, covers three code positions. However, it will be appreciated that such a technique involves no overlap between the correlations. An alternative is to provide for some overlap, and this can be achieved for example by using a second code which is a sum of 3 further binary codes and then shifting the second code by just two bit positions between each correlation. Such a technique can result in higher peak correlations being observed and/or can enable peak correlations to be identified more easily and/or more accurately. It will be appreciated, however, that the use of 3 further binary codes to form a second code, and the use of 2 bit and 3 bit circular shifts are merely examples, and alternative embodiments may use other numbers of further binary codes and other shifts.

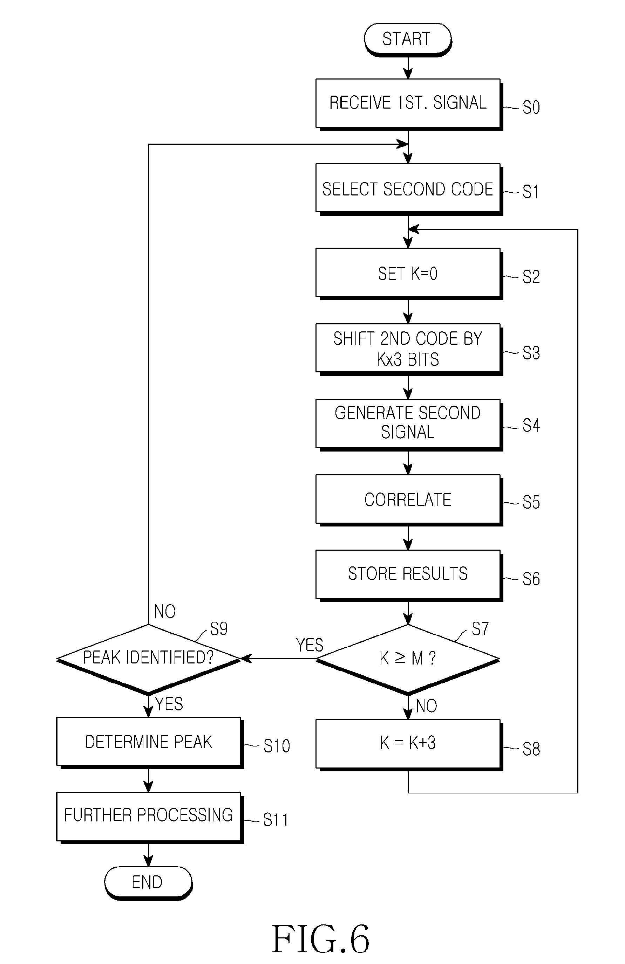

Referring now to Fig. 6, this shows a signal processing method embodying the invention. In step S0 a first code-modulated signal is received. The first code used to modulate this signal is initially unknown. Therefore, in step S1 the method selects one of a plurality of stored second codes from a memory. These second codes have been generated previously, each one corresponding to a respective first code used by a transmitter from which the first signal may be received. Having selected this second code, the method moves on to step S2 in which a variable K is set to 0. Next, in step S3 the selected second code is shifted circularly to the right by K x 3 bit positions. In step S4 a second signal is generated, carrying or comprising the shifted second code, and in step S5 a correlation is determined between the second signal and the received signal. A result of this correlation is then stored in a memory in step S6. In step S7, a determination is made as to whether variable K has reached a threshold value M. When K = M, the second code has been circularly shifted by its entire length. If K is less than M the method proceeds to step S8, in which variable K is incremented by 3, and the method returns to step S3, with the second code now being shifted by an additional 3 bits before being used to generate the second signal, and another correlation value being obtained. In this manner, the method determines correlation between the received signal and the second signal generated so as to cover all possible positions of the locally generated code with respect to the received code. In step S7, if K is equal to M then the method proceeds to step S9 in which a determination is made as to whether a sufficiently high peak correlation has been observed in the correlation results. If not, then the selected code is not a second code corresponding to the first code used to modulate the received signal, and the method returns to step S1 where a different second code is selected. Alternatively, if step S9 determines that a sufficiently high peak correlation has been observed then the method proceeds to step S10 where the particular shifted second code given the peak correlation is retrieved from memory. The method then proceeds to step S11 in which further processing is performed to determine the particular further binary code (from which the particular shifted second code is formed) gives peak correlation. The outcome of this method is that the first code on the received signal is identified. Additionally, the delay required to give peak correlation is also established.

It will be appreciated that although the method of Fig. 6 involves the selection of a pre-stored second code from memory, further embodiments may select a first further binary code from memory, and then generate the corresponding second code from that first further binary code.

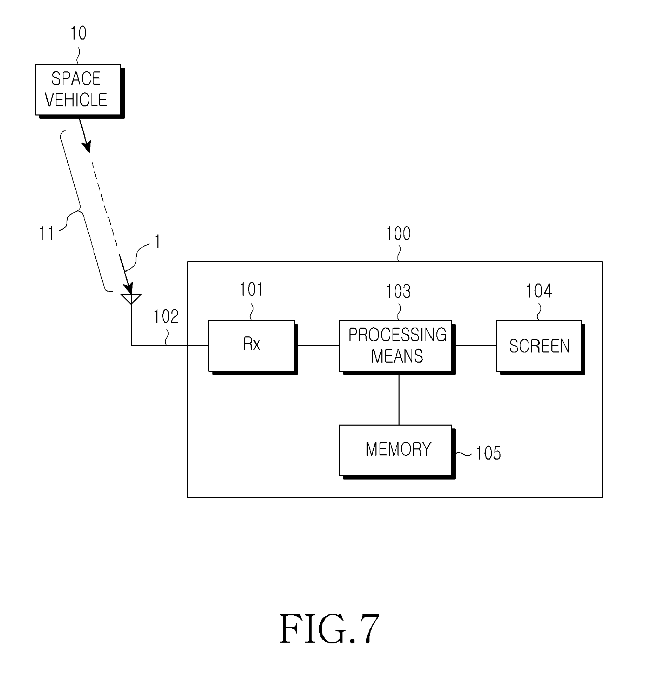

Referring now to Fig. 7, an apparatus is shown embodying the invention in the form of a GPS receiver 100 arranged to receive a first code modulated signal 1 from a space vehicle 10 of a GNSS system. The signal 1 has been transmitted over a transmission path 11, and as a result comprises an unknown delay. The GNSS receiver 100 comprises receiving means 101 including an antenna 102 for receiving the first code-modulated signal 1. The GNSS receiver 100 also comprises signal processing means 103 arranged to communicate with a memory 105, and adapted to process the received signal 1 using methods embodying the invention and as described above. The signal processing means 103 is able to process the received signal 1 to identify the first binary code used by the respective SV 10 and to determine the delay it needs to place on a locally generated code to give peak correlation with the received signal 1. Although not shown, the receiver 100 is adapted to receive and process a plurality of further signals from other space vehicles of the system and identify the transmitting SVs from the respective first codes. The signal processing means is thus adapted to acquire the various SV navigation signals using methods embodying the invention, and then to extract navigation data from them. From the extracted navigation data the processing means 103 is then adapted to calculate a location or position of the unit 100, and to provide an indication of this location or position to a user by means of a screen 104.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing a system or method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A method of processing a received first code-modulated signal, the received first code-modulated signal being a first signal modulated with a first code, to determine at least one of said first code and a delay in the first code-modulated signal, the method comprising:
determining a correlation between the received first code-modulated signal and a second code, the second code being at least substantially a sum of a plurality of further codes.

2. A method in accordance with claim 1, further comprising: generating said second code by adding said plurality of further codes.

3. A method in accordance with any preceding claim, wherein the plurality of further codes comprises a first further code, comprising a sequence of N code elements, and the or each other further code of said plurality of further codes comprises the same sequence of N code elements as the first further code but circularly shifted in position by a respective predetermined amount, such that each code element of the sequence of N code elements in the or each other further code has a position which is circularly shifted by the respective predetermined amount compared with the position of the corresponding code element in the first further code.

4. A method in accordance with any preceding claim, wherein the plurality of further codes is a plurality of further binary codes comprising a first further binary code, comprising a sequence of N bits, and the or each other further binary code of said plurality of further binary codes comprises the same sequence of N bits as the first further binary code but circularly shifted in position by a respective predetermined amount, such that each bit of the sequence of N bits in the or each other further binary code has a position which is circularly shifted by the respective predetermined amount compared with the position of the corresponding bit in the first further binary code.

5. A method in accordance with claim 4, wherein said first code is a first binary code comprising the same sequence of N bits as each of said further binary codes.

6. A method in accordance with any one of claims 1 to 5, wherein said plurality of further binary codes form a series of codes in which the sequence of bits in each code is circularly shifted by one bit position from one further binary code to the next in the series.

7. A method in accordance with any preceding claim, further comprising:
introducing a delay into the second code;
varying the delay introduced into the second code to identify a peak correlation between the first code-modulated signal and the second code.

8. A method in accordance with any preceding claim, further comprising:
applying a circular shift to the second code; and
determining a correlation between the received first code-modulated signal and the shifted second code.

9. A method in accordance with claim 8, further comprising:
varying the applied circular shift to determine a peak correlation between the first code-modulated signal and the shifted second code.

10. A method in accordance with any preceding claim, further comprising:
selecting said second code from a plurality of second codes, each being at least substantially a sum of a respective plurality of further codes comprising a respective first further code.

11. A method in accordance with any preceding claim, wherein the second code is a second binary code substantially being a sum of a plurality of further binary codes including a first further binary code, the method further comprising:
generating the second binary code by forming a sum of said plurality of further binary codes, and wherein generating the second binary code further comprises generating the or each other further binary code of said plurality from said first further binary code.

12. A method in accordance with claim 11, further comprising:
selecting said first further binary code from a plurality of binary codes.

13. A method in accordance with any preceding claim, further comprising:
determining a strength of the received first code-modulated signal; and
determining the number of further codes in said plurality of further codes according to said strength.

14. A method in accordance with any preceding claim, further comprising:
determining correlations between the first code-modulated signal and a plurality of said second codes, each second code being at least substantially a sum of a respective plurality of further codes;
determining from said correlations the particular second code giving a peak correlation; and
performing further processing to determine which of the further codes corresponding to the particular second code corresponds to the first code.

15. A GNSS receiver adapted to implement a method in accordance with any preceding claim, comprising:
receiving means for receiving said first code-modulated signal; and
processing means for determining said correlation or correlations.
